# EUROPÄISCHE PATENTANMELDUNG

(11) **EP 1 489 481 A1**
(43) Veröffentlichungstag der Anmeldung: **22.12.2004**
(21) Anmeldenummer: 03013817.6
(22) Anmeldetag: 18.06.2003
(51) Int. Cl.: G06F 3/033

(54) **Eingabevorrichtung zur Benutzeridentifizierung für einen Computer**

(71) Anmelder: Identification Systems DERMALOG GmbH, 20148 Hamburg (DE)
(72) Erfinder: Mull, Günther, 22085 Hamburg (DE)
(74) Vertreter: UEXKÜLL & STOLBERG

(57) **Zusammenfassung**

Die Erfindung betrifft eine Eingabevorrichtung zur Benutzeridentifizierung für einen Computer, die als Mousepads gestaltet ist, wobei an der Mousepad-Oberfläche, die zum Bewegen der Mouse vorgesehen ist, ein Fingerabdruckfeld-Sensor (2) vorgesehen ist, der dazu ausgestaltet ist, um bei Berührung des Sensors mit dem Finger eines Benutzers an den Computer weiterleitbare Fingerabdruckdaten zu erfassen, um auf Grundlage der Fingerabdruckdaten die Benutzeridentifizierung zu ermöglichen, dadurch gekennzeichnet, daß in dem Mousepad eine Smartcard-Leseeinrichtung (6) zum Lesen von benutzeridentifizierenden Daten und ein Signatur-Sensorfeld (4) zur Aufnahme von eine Unterschrift repräsentierenden Daten vorgesehen sind, und daß eine USB-Verteilereinheit (8) in das Mousepad integriert ist, die mit dem Fingerabdruckfeld-Sensor, der Smartcard-Leseeinrichtung und dem Signatur-Sensorfeld und mit einem USB-Anschluß (12) an dem Mousepad verbunden ist, so daß über den USB-Anschluß sämtliche Daten des Fingerabdruckfeld-Sensors, der Smartcard-Leseeinrichtung und des Signatur-Sensorfeldes in einen angeschlossenen Computer einspeisbar sind.

## Beschreibung

Die vorliegende Erfindung betrifft eine Eingabevorrichtung zur Benutzeridentifizierung für einen Computer.

Seit langem werden für Computer Paßwörter oder Codeziffern verwendet, um den Benutzer zu identifizieren und seine Zugangsberechtigung zu dem Computer festzustellen, um unberechtigte Benutzungen zu verhindern. Die Nachteile dieser Verfahrensweise sind ebenfalls seit langem bekannt, denn der Benutzer muß sich das Paßwort oder Codewort merken. Da heute viele Geräte mit Paßwörtern oder Geheimzahlen die Identifizierung des berechtigten Benutzers durchführen, muß der Benutzer sich eine Vielzahl von Paßwörtern und Geheimzahlen merken, was häufig dazu führt, daß die Paßwörter bzw. Geheimzahlen aufgeschrieben und beispielsweise in der Nähe des Computers plaziert werden. Daher besteht natürlich ein erhebliches Risiko, daß Unberechtigte sich nach Kenntnisnahme des Paßworts oder der Geheimnummer unberechtigt Zugang zu dem Computer verschaffen können und damit unter falscher Identifizierung tätig werden können.

Darüber hinaus ist es bekannt, eine Eingabevorrichtung zur Benutzeridentifizierung an den Computer anzuschließen, wobei die Eingabevorrichtung einen Sensor mit einem Fingerabdruckfeld aufweist. Der Sensor ist dazu ausgestaltet, um bei Auflage eines Fingers des Benuzters an den Computer weiterleitbare Fingerabdruckdaten zu erfassen. Mit Hilfe von gespeicherten Fingerabdruckdaten des Benutzers kann so ein Vergleich durchgeführt werden und bei Übereinstimmung der Benutzer positiv identifziert werden. Es wurde beispielsweise auch vorgeschlagen, einen Fingerabdrucksensor in die Maus des Computers zu integrieren.

Es ist weiter bekannt, einen solchen Sensor mit einem Fingerabdruckfeld in ein Mousepad zu integrieren. Ein solches Mousepad wurde von der Anmelderin unter der Bezeichnung "Finger Logon" vorgestellt. Der Oberbegriff von Anspruch 1 bezieht sich auf ein solches Mousepad.

Es ist Aufgabe der vorliegenden Erfindung, eine Eingabevorrichtung zur Benutzeridentifizierung für einen Computer anzugeben, mit der die Identifizierungssicherheit weiter gesteigert werden kann und die einfach an einen Computer anschließbar ist.

Zur Lösung dieser Aufgabe dient die Eingabevorrichtung mit den Merkmalen des Patentanspruchs 1. Vorteilhafte Ausführungsformen der Erfindung sind in den Unteransprüchen angegeben.

Die Eingabevorrichtung ist so ausgestaltet, daß die Benutzeridentifizierung mit noch höherer Sicherheit als bisher durchgeführt werden kann. Dazu ist vorgesehen, daß an der in Form eines Mousepads gestalteten Eingabevorrichtung neben dem Sensor zur Aufnahme der Fingerabdruckdaten weitere Datenaufnahmeeinrichtung zur Aufnahme benutzeridentifizierender, an den Computer weiterleitbarer Daten vorgesehen ist, um auf Grundlage der Fingerabdruckdaten und der benutzeridentifizierenden weiteren Daten die Benutzeridentifizierung zu ermöglichen. So ist an der Oberfläche der als Mousepad gestalteten Eingabevorrichtung neben dem Sensor zur Aufnahme von Fingerabdruckdaten ein Signatur-Sensorfeld vorgesehen sein, mit dem die Unterschrift des Benuzters erfaßt werden kann. Die Unterschriftsdaten werden zusätzlich zu den Fingerabdruckdaten aufgenommen, um so eine weitere Überprüfung der Identifizierung zu ermöglichen. Zusätzlich ist in dem Mousepad eine Smartcard-Leseeinrichtung vorgesehen, in die der berechtigte Benutzer seine Smartcard einführen kann, um so eine weitere Erhöhung der Sicherheit zu ermöglichen. Auf der Smartcard können z.B. auch die Fingerabdruckdaten gespeichert sein, so daß diese nicht anderweitig gespeichert sein müssen.

Eine solche zusätzliche und unabhängige Identifizierung über die Aufnahme der Unterschrift kann insbesondere in Anwendungsfeldern erwünscht sein, wo eine gesicherte zusätzliche Identifizierung erwünscht ist, z.B. im Bereich des E-Commerce, bei elektronischer Abwicklung von Bankgeschäften etc.. Beispielsweise kann die Aufnahme einer Unterschrift auch dazu dienen, eine Signatur in elektronischer Form an eine e-mail anzuhängen, um den Absender eindeutig zu identifieren.

Der Fingerabdruckfeld-Sensor, der Smartcard-Leseeinrichtung und das Signatur-Sensorfeld sind mit einer USB-Verteilereinheit (oft mit dem englischen Begriff "USB Hub" bezeichnet, USB = Universal Serial Bus) verbunden, die in das Mousepad integriert ist. Die USB-Verteilereinheit ist mit einem in dem Mousepad vorgesehenen USB-Anschluß verbunden, so daß die Daten von dem Fingerabdruckfeld-Sensor, der Smartcard-Leseeinrichtung und dem Signatur-Sensorfeld über einen einzigen USB-Anschluß in einen Computer einspeisbar sind.

Die erfindungsgemäße Vorrichtung ist mit einem Sensor mit einem Fingerabdruckfeld, der im Bereich einer Ecke des Mousepads angeordnet sein kann, versehen. Daneben ist ein Signatur-Sensorfeld angeordnet sein. Die Smartcard-Leseeinrichtung kann so in dem Mousepad angeordnet sein, daß der Schlitz zum Einführen der Smartcard an einer Seitenwand des Mousepads liegt, d.h. die Karte parallel zur Mousepad-Oberfläche von der Seite in dieses eingeschoben werden kann. In diesem Fall ist das Mouspad gegenüber herkömmlichen etwas erhöht, so daß die Smartcard-Leseeinrichtung genügend Platz hat.

Durch die Kombination der Daten des Fingerabdruckfeld-Sensors, der Smartcard-Leseeinrichtung und des Signatur-Sensorfeldes läßt sich eine signifikant höhere Sicherheit bei der Benutzeridentifizierung erreichen.

An dem Mousepad können weitere USB-Anschlüsse vorgesehen sein, die mit der USB-Verteilereinheit in dem Mousepad, gegebenenfalls über eine weitere USB-Verteilereinheit, verbunden sind. Auf diese Weise können weitere Peripheriegeräte über das Mousepad mit einem damit vebundenen Computer angeschlossen werden, ohne daß ein weiterer USB-Anschluß am Computer benötigt wird.

Die USB-Verteilereinheit kann also Verteileranschlüsse in mehrere Richtungen haben, von denen einige im Inneren des Mousepads liegen und einige Anschlüsse nach außen haben. Die inneren Anschlüsse dienen dazu, die ein-/ausgehenden Signale vom Fingerabdruckfeld-Sensor, der Smartcard-Leseeinrichtung und dem Signatur-Sensorfeld aufzunehmen bzw. dorthin weiterzuleiten. Die äußeren Anschlüsse der USB-Verteilereinheit können, wenn vorhanden, dazu benutzt werden, um weitere Geräte über das Mousepad an den Computer anzuschließen. Insofern muß nur ein Kabel vom Mousepad zum Computer führen, und dennoch können die in das Mousepad integrierten Fingerabdruckfeld-Sensor, Smartcard-Leseeinrichtung und Signatur-Sensorfeld mit dem Computer kommunizieren und, wenn weitere äußere USB-Anschlüsse an dem Mousepad vorhanden sind, weitere Peripheriegeräte an den Computer angeschlossen werden.

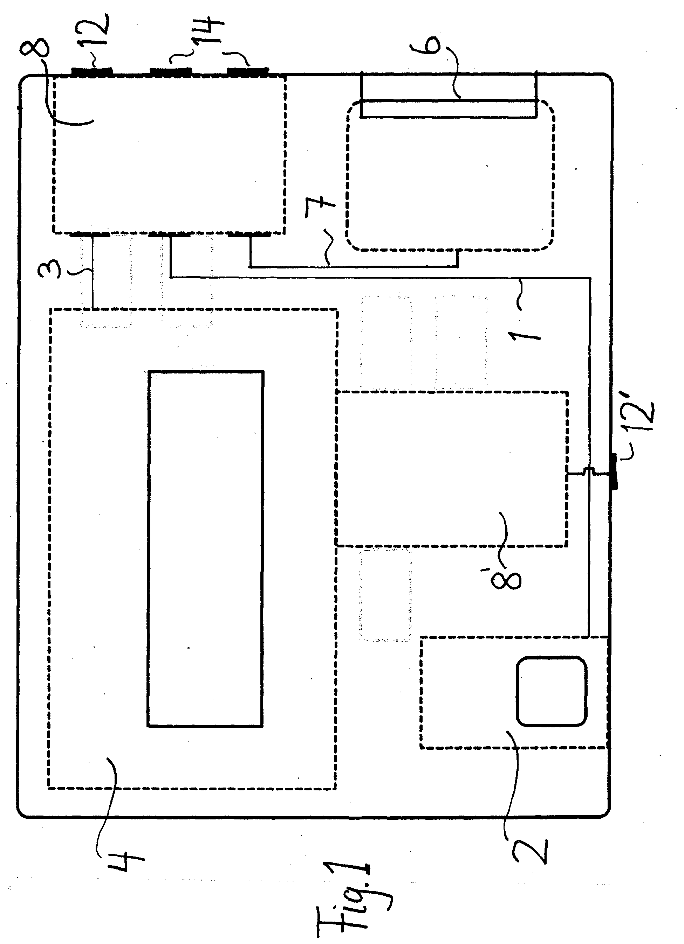

Figur 1 zeigt eine schematische Draufsicht auf die Eingabevorrichtung zur Benutzeridentifizierung als Blockdiagramm.

Figur 1 zeigt ein Mousepad als Blockdiagramm mit darin integrierten Funktionseinheiten. In das Mousepad ist ein Fingerabdruckfeld-Sensor 2 eingebaut, dessen sensitive, an der Mousepad-Oberfläche liegende Sensorfläche mit durchgezogenen Linien gezeigt ist.

Ferner ist ein Signatur-Sensorfeld 4 vorgesehen, wobei die beschreibbare, an der Mousepad-Oberfläche liegende Sensorfläche mit durchgezogenen Linien dargestellt ist.

Darüber hinaus ist eine Smartcard-Leseeinrichtung 6 vorhanden, wobei der Schlitz zum Einführen der Smartcard in durchgezogenen Linien dargestellt ist.

Der Fingerabdruckfeld-Sensor 2 ist über ein USB-Kabel 1, das Signatur-Sensorfeld 4 über ein USB-Kabel 3 und die Smart-Card-Leseeinrichtung 6 über ein USB-Kabel 7 mit einer USB-Verteilereinheit 8 (USB-Hub) verbunden. In der dargestellten bevorzugten Ausführungsform hat die USB-Verteilereinheit neben den drei internen Anschlüssen drei externe Anschlüsse 12, 14, wobei ein Anschluß 12 zur Verbindung mit dem Computer vorgesehen ist, und die weiteren externen Anschlüsse 14 zum Anschluß von weiteren Peripheriegeräten an den Computer dienen können.

In einer alternativen Ausführungsform ist eine USB-Verteilereinheit 8' vorhanden, die nur über einen externen Anschluß 12' verfügt, mit dem die Eingabevorrichtung mit dem Computer über ein USB-Kabel verbindbar ist. Die Verbindungen dieser alternativen USB-Verteilereinheit 8' mit den Sensoren sind der Einfachheit halber in der Zeichnung nicht dargestellt.

## Patentansprüche

1. Eingabevorrichtung zur Benutzeridentifizierung zum Anschluß an einen Computer, die als Mousepad gestaltet ist, wobei an der Mousepad-Oberfläche, die zum Bewegen der Mouse vorgesehen ist, ein Fingerabdruckfeld-Sensor (2) vorgesehen ist, der dazu ausgestaltet ist, um bei Berührung des Sensors mit dem Finger eines Benutzers an den Computer weiterleitbare Fingerabdruckdaten zu erfassen, um auf Grundlage der Fingerabdruckdaten die Benutzeridentifizierung zu ermöglichen, **dadurch gekennzeichnet, daß** in dem Mousepad eine Smartcard-Leseeinrichtung (6) zum Lesen von benutzeridentifizierenden Daten und ein Signatur-Sensorfeld (4) zur Aufnahme von eine Unterschrift repräsentierenden Daten vorgesehen sind, und daß eine USB-Verteilereinheit (8) in dem Mousepad integriert ist, die mit dem Fingerabdruckfeld-Sensor (2), der Smartcard-Leseeinrichtung (6) und dem Signatur-Sensorfeld (4) und mit einem USB-Anschluß an dem Mousepad verbunden ist, so daß über den USB-Anschluß (12) sämtliche Daten des Fingerabdruckfeld-Sensors, der Smartcard-Leseeinrichtung und des Signatur-Sensorfeldes in einen angeschlossenen Computer einspeisbar sind.

2. Eingabevorrichtung nach Anspruch 1, **dadurch gekennzeichnet, daß** an dem Mousepad weitere USB-Anschlüsse (14) vorgesehen sind, die mit der USB-Verteilereinheit (8) verbunden sind, so weitere Peripheriegeräte über das Mousepad mit einem damit vebundenen Computer verbindbar sind.
